Europäisches Patentamt

European Patent Office

Office européen des brevets

(11) Veröffentlichungsnummer: **0 383 099 B1**

(12) **EUROPÄISCHE PATENTSCHRIFT**

(45) Veröffentlichungstag der Patentschrift: **29.06.94**

(51) Int. Cl.$^5$: **C08F 297/08**

(21) Anmeldenummer: **90101949.7**

(22) Anmeldetag: **01.02.90**

---

(54) **Verfahren zur Herstellung von Propylen-Ethylen-Copolymerisaten.**

---

(30) Priorität: **11.02.89 DE 3904079**

(43) Veröffentlichungstag der Anmeldung:
**22.08.90 Patentblatt 90/34**

(45) Bekanntmachung des Hinweises auf die
Patenterteilung:
**29.06.94 Patentblatt 94/26**

(84) Benannte Vertragsstaaten:
**AT BE DE ES FR GB IT NL**

(56) Entgegenhaltungen:
EP-A- 0 125 590    EP-A- 0 125 593
EP-A- 0 131 268    EP-A- 0 192 427
EP-A- 0 202 946    EP-A- 0 276 734
US-A- 4 454 299

(73) Patentinhaber: **BASF Aktiengesellschaft
Carl-Bosch-Strasse 38
D-67063 Ludwigshafen(DE)**

(72) Erfinder: **Kerth, Juergen, Dr.
Wattenheimer Strasse 15
D-6719 Carlsberg(DE)**
Erfinder: **Schwager, Harald, Dr.
Ziegelofenweg 7
D-6720 Speyer(DE)**
Erfinder: **Zolk, Ralf, Dr.
Weinbietstrasse 7
D-6714 Weisenheim(DE)**

**Beschreibung**

Die vorliegende Erfindung betrifft ein Verfahren zur Herstellung von Propylen-Ethylen-Copolymerisaten durch Gasphasenpolymerisation in einem bewegten Festbett mit Hilfe eines Ziegler-Natta-Katalysatorsystems.

Verfahren zur Herstellung von Propylen-Ethylen-Copolymerisaten durch Ziegler-Natta-Polymerisation sind bereits in einer Reihe von Patentschriften beschrieben worden. Aus US-A 4 260 710 ist bekannt, Homo- und Copolymerisate von $\alpha$-Olefinen durch Polymerisation mit Hilfe von Ziegler-Natta-Katalysatoren in einem Rührkessel herzustellen. Die dabei verwendeten Katalysatorkomponenten enthalten u.a. Verbindungen des mehrwertigen Titans, Aluminiumhalogenide und/oder -alkyle, sowie Elektronendonorverbindungen, wobei meistens Silane, Ester, Ether, Ketone oder Lactone verwendet werden (EP-B 14 523, EP-B 45 977, EP-B 86 473, EP-A 171 200).

Desweiteren sind eine Reihe von Verfahren zur Darstellung von Propylen-Ethylen-Blockcopolymeren mit Hilfe eines Ziegler-Natta-Katalysatorsystems bekannt (US-A 4 454 299, US-A 4 455 405, EP-A-125593, EP-A-125590, EP-A-131268, GB-B 1 032 945), bei denen man zunächst gasförmiges Propylen in einer ersten Reaktionszone polymerisiert und das daraus erhältliche Homopolymerisat anschließend in eine zweite Reaktionszone bringt, wo ein Gemisch aus Ethylen und Propylen hinzupolymerisiert wird. Das Verfahren wird gewöhnlich bei erhöhtem Druck und in Anwesenheit von Wasserstoff als Molmassenregler durchgeführt. Die dabei erhältlichen Copolymerisate weisen meist eine ausgezeichnete Schlagzähigkeit, zugleich aber auch eine im Vergleich zu reinem Polypropylen deutlich verminderte Steifigkeit auf. Für einige Anwendungsbereiche werden aber vorwiegend Copolymerisate benötigt, welche neben einer für praktische Zwecke ausreichend guten Schlagzähigkeit auch eine hohe Steifigkeit aufweisen. Außerdem enthalten die Copolymerisate oft noch Katalysatorreste, insbesondere Titan, Aluminium und Chlor, was ihre Anwendbarkeit u.a. im Lebensmittel- und Hygienebereich einschränkt.

Der vorliegenden Erfindung lag die Aufgabe zugrunde, den geschilderten Nachteilen abzuhelfen und ein Verfahren zu entwickeln, welches die Herstellung von Propylen-Ethylen-Copolymerisaten mit erhöhter Steifigkeit, bei gleichzeitig noch ausreichender Schlagzähigkeit und geringeren Katalysatorgehalten ermöglicht.

Diese Aufgabe wurde gelöst durch ein Verfahren zur Herstellung von Propylen-Ethylen-Copolymerisaten in einem bewegten Festbett, wobei man aus der Gasphase heraus zunächst in einer ersten Polymerisationszone bei einem Druck von 20 bis 40 bar und einer Temperatur von 60 bis 90°C Propylen durch Zufuhr eines Ziegler-Natta-Katalysatorsystems polymerisiert und in einer zweiten Polymerisationszone unter einem Druck von 7 bis 35 bar und einer Temperatur von 40 bis 70°C dem aus der ersten Polymerisationszone ausgebrachten feinteiligen Polymerisat ein Gemisch aus Propylen, Ethylen und einem weiteren $\alpha$-Olefin mit 4 bis 10 C-Atomen hinzupolymerisiert, dabei das Verhältnis der Partialdrücke zwischen Propylen und Ethylen im Bereich von 100 : 20 bis 100 : 120 und das zwischen Propylen und dem weiteren $\alpha$-Olefin im Bereich von 100 : 1 und 100 : 20 einstellt, den Druck in der zweiten Polymerisationszone um wenigstens 5 bar unterhalb des Drucks in der ersten Polymerisationszone wählt und das Gewichtsverhältnis zwischen den in der ersten und den in der zweiten Polymerisationszone umgesetzten Monomeren so bemißt, daß es in einem Bereich zwischen 100 : 10 und 100 : 50 liegt.

Das Verfahren kann in den üblichen, für Polymerisationen verwendeten Reaktoren entweder absatzweise oder bevorzugt kontinuierlich durchgeführt werden. Geeignete Reaktoren sind u.a. kontinuierlich betriebene Rührkessel, wobei man meistens eine Reihe von mehreren hintereinander geschalteten Rührkesseln einsetzt. Die Reaktoren enthalten ein Festbett aus feinteiligem Polymerisat, welches üblicherweise durch geeignete Rührvorrichtungen in Bewegung gehalten wird.

Das Verfahren kann mit den in der Polymerisationstechnik üblichen Ziegler-Natta-Katalysatoren durchgeführt werden. Diese enthalten u.a. neben mehrwertigen Titan- und Aluminiumkomplexen auch Elektronendonorverbindungen. Man verwendet bevorzugt eine Titankomponente, welche auf feinteiligem formgebenden Kieselgel basiert und neben Titan noch Magnesium, Chlor und ein Benzolcarbonsäurederivat enthält. Weitere Katalysatorbestandteile sind Trialkylaluminiumverbindungen und Silankomplexe mit bis zu vier verschiedenen Alkyl-, Aryl- oder Alkoxyresten als Elektronendonorverbindungen.

Die bevorzugt eingesetzte Titankomponente wird nach einem dreistufigen Verfahren hergestellt.

In der ersten Stufe versetzt man zunächst $SiO_2 \cdot xAl_2O_3$ (x = 0-3), welches einen Teilchendurchmesser von bis zu 1000 $\mu$m, ein Porenvolumen von wenigstens 0,3 $cm^3$/g und eine Oberfläche von mehr als 100 $m^2$/g aufweist, mit einer in einem flüssigen Alkan gelösten Dialkylmagnesiumverbindung, wobei ein Alkylrest bis zu 10 C-Atome enthält, und rührt dieses Gemisch einige Stunden lang bei erhöhter Temperatur. Man setzt pro Mol $SiO_2 \cdot xAl_2O_3$ 0,1 bis 1 Mol der organischen Magnesiumverbindung ein. Anschließend leitet man unter ständigem Rühren Chlor oder gasförmigen Chlorwasserstoff im wenigstens zweifachen molaren Überschuß, bezogen auf die magnesiumorganische Verbindung, ein. Nach etwa 30 bis 60 Minuten trennt man den Feststoff von der flüssigen Phase ab.

In der zweiten Stufe bringt man das auf diese Weise erhaltene Produkt in ein flüssiges Alkan ein, fügt danach ein bis zu 8 C-Atome aufweisendes Alkanol, insbesondere Ethanol hinzu und versetzt dieses Gemisch anschließend mit Titantetrachlorid und einem Dialkoxyesterderivat der Phthalsäure. Vorzugsweise sollte dabei ein Alkoxyrest nicht mehr als 8 C-Atome aufweisen. Dabei setzt man pro Mol Magnesium des aus der ersten Stufe erhaltenen Feststoffs 1 bis 5 Molteile Alkanol, 2 bis 20 Molteile Titantetrachlorid und 0,01 bis 1 Molteil des Phthalsäurederivats ein. Die Lösung wird wenigstens eine Stunde lang bei erhöhter Temperatur gerührt und das erhaltene Festprodukt anschließend abfiltriert.

In der dritten Stufe extrahiert man den aus der zweiten Stufe erhaltenen Feststoff einige Stunden lang bei einer Temperatur von mehr als 100°C mit überschüssigem Titantetrachlorid oder einer im Überschuß vorliegenden Lösung von Titantetrachlorid in Alkylbenzol, wobei diese wenigstens 5 Gew.-% Titantetrachlorid enthält. Danach wäscht man das Produkt solange mit einem flüssigen Alkan, bis die Waschflüssigkeit einen Gehalt an Titantetrachlorid von weniger als 2 Gew.-% aufweist.

Als Aluminiumkomponente werden im erfindungsgemäßen Verfahren Trialkylaluminiumverbindungen eingesetzt, wobei der Alkylrest bis zu 8 C-Atome enthält. Beispiele dafür sind u.a. Triethyl- und Trimethylaluminium.

Bevorzugte Elektronendonorverbindungen sind u.a. Silane mit Alkyl-, Aryl- oder Alkoxyresten, welche über nicht mehr als 10 C-Atome pro Substituent verfügen. Besonders geeignet sind Isobutylisopropyldimethoxysilan und Triethoxytoluylsilan.

In der bevorzugten Katalysatorausführung liegt das Atomverhältnis zwischen Titan und Aluminium im Bereich von 1 : 20 und 1 : 200 und das Molverhältnis zwischen der Aluminium- und der Silankomponente im Bereich von 1 : 0,01 und 1 : 0,5. Die einzelnen Katalysatorbestandteile können in beliebiger Reihenfolge einzeln oder als Gemisch zweier Komponenten in das Polymerisationssystem eingebracht werden.

Nach Beendigung der Propylenpolymerisation wird das Polymerisat zusammen mit dem Katalysator aus der ersten Polymerisationszone ausgetragen und in die nächste eingeführt, wo, wie zuvor beschrieben, Ethylen, Propylen und ein weiteres $\alpha$-Olefin mit 4 bis 10 C-Atomen hinzupolymerisiert werden. Besonders geeignete weitere $\alpha$-Olefine sind 1-Buten, 1-Penten, 1-Hexen und 1-Hepten.

Die mittleren Verweilzeiten in beiden Polymerisationszonen betragen jeweils 0,1 bis 20, bevorzugt 0,5 bis 10 Stunden. Das Molekulargewicht der Polymerisate kann wie üblich durch Zugabe von Reglern, insbesondere von Wasserstoff, kontrolliert werden.

Die nach dem erfindungsgemäßen Verfahren hergestellten Copolymerisate weisen Schmelzflußindices von 0,1 bis 100 g/10 min, vorzugsweise von 0,2 bis 10 g/10 min auf, jeweils gemessen nach DIN 53 735 bei 230°C und 2,16 kg. Der Schmelzflußindex entspricht dabei der Menge an Polymerisat, die innerhalb von 10 Minuten aus der nach DIN 53 735 genormten Prüfvorrichtung bei einer Temperatur von 230°C und unter einem Gewicht von 2,16 kg ausgepreßt wird. Das Verfahren ermöglicht die Herstellung von Copolymerisaten mit einer ausgezeichneten Steifigkeit, einer verbesserten Rieselfähigkeit und einer den praktischen Anforderungen genügenden Kerbschlagzähigkeit. Das Copolymerisat enthält nur geringe Mengen an Katalysatorbestandteilen.

Aufgrund ihrer guten mechanischen Eigenschaften eignen sich solche Copolymerisate insbesondere zur Herstellung von Folien, Rohren, Belägen, Fasern, Hohlkörpern, Spritzgußartikeln und von Formteilen für den Fahrzeugbau.

Beispiel

Das Verfahren wurde in zwei hintereinander geschalteten Rührautoklaven mit einem Nutzvolumen von jeweils 180 l in Anwesenheit von Wasserstoff als Molekulargewichtsregler durchgeführt. Beide Reaktoren enthielten ein bewegtes Festbett aus feinteiligem Polymerisat.

In den ersten Polymerisationsreaktor wurde bei einem Druck von 28 bar und einer Temperatur von 70°C gasförmiges Propylen eingeleitet und dieses bei einer mittleren Verweilzeit von 3 Stunden mit Hilfe eines Ziegler-Natta-Katalysators polymerisiert. Dieser enthielt neben einer Titankomponente, Triethylaluminium und Isobutylisopropyldimethoxysilan, wobei das Atomverhältnis Titan zu Aluminium 1 : 100 und das Molverhältnis Triethylaluminium zur Silankomponente 1 : 0,1 betrug. Die Titankomponente wurde nach dem als bevorzugt beschriebenen Verfahren hergestellt.

Dazu versetzte man in einer ersten Stufe $SiO_2 \cdot xAl_2O_3$, welches einen Teilchendurchmesser von 20 bis 45 $\mu$m, ein Porenvolumen von 1,75 cm$^3$/g und eine Oberfläche von 320 m$^2$/g aufwies, mit in n-Heptan gelöstem Butyl-octylmagnesium, wobei pro Mol $SiO_2 \cdot xAl_2O_3$ 0,5 Mol der Magnesiumverbindung eingesetzt wurden. Die Lösung wurde 1,5 Stunden lang bei 90°C gerührt, danach auf 20°C abgekühlt und anschließend die 10-fache molare Menge, bezogen auf die magnesiumorganische Verbindung, an Chlorwasserstoff eingeleitet. Nach 30 Minuten trennte man das festphasige Produkt vom Lösungsmittel ab.

Das aus der ersten Stufe erhältliche Produkt löste man erneut in n-Heptan und fügte unter ständigem Rühren 3 Molteile Ethanol, bezogen auf 1 Molteil Magnesium hinzu. Diese Lösung wurde 1,5 Stunden lang bei 80°C gerührt und anschließend mit 6 Molteilen Titantetrachlorid und 0,5 Molteilen Phthalsäuredi-n-butylester, jeweils bezogen auf 1 Molteil Magnesium, versetzt. Die Lösung wurde weitere zwei Stunden gerührt und danach der Feststoff vom Lösungsmittel durch Absaugen getrennt.

Das daraus erhältliche Produkt extrahierte man zwei Stunden lang bei 125°C mit einer 15 gewichtsprozentigen Lösung von Titantetrachlorid in Ethylbenzol. Danach wurde das Festprodukt durch Filtration vom Extraktionsmittel getrennt und solange mit n-Heptan gewaschen, bis dieses nur mehr 0,3 Gew.-% Titantetrachorid enthielt.

Das im ersten Reaktor gebildete Propylenpolymerisat wurde anschließend zusammen mit dem Katalysator in den zweiten Rührautoklaven übergeführt und dort dem Polymerisat bei einem Gesamtdruck von 11 bar, einer Temperatur von 50°C und einer mittleren Verweilzeit von 1 Stunde ein Gemisch aus Propylen, Ethylen und 1-Buten hinzupolymerisiert. Das Verhältnis der Partialdrücke zwischen Propylen, Ethylen und 1-Buten betrug dabei 100 : 47 : 6. Das Gewichtsverhältnis zwischen dem im ersten Reaktor gebildeten Propylenpolymerisat und dem im zweiten Reaktor entstandenen Copolymerisat lag bei 100 : 20.

Man erhält bei diesem Beispiel Copolymerisate aus Propylen, Ethylen und 1-Buten mit einem Schmelzflußindex von 2,0 g/10 min, bei 230°C und 2,16 kg (nach DIN 53 735). Die entsprechenden mechanischen Eigenschaften können der nachstehenden Tabelle entnommen werden. Der Titangehalt im erfindungsgemäßen Copolymerisat beträgt 2 ppm, der von Chlor 11 ppm.

Vergleichsbeispiel

In der gleichen Reaktoranordnung wurde der Versuch unter identischen Bedingungen wiederholt, mit der einzigen Abänderung daß in der zweiten Polymerisationszone das hinzugefügte Monomerengemisch kein 1-Buten enthielt. Das daraus resultierende Copolymerisat wies den gleichen Schmelzflußindex, aber eine deutliche schlechtere Rieselfähigkeit und eine wesentlich geringere Steifigkeit auf.

Die genauen Ergebnisse sind in der nachstehenden Tabelle verzeichnet.

Tabelle

| | Schmelzfluß- a) index (g/10 min) | mittlerer b) Korndurchmesser (mm) | Riesel- c) fähigkeit (g/sek) | Kerbschlag- d) zähigkeit (kJ/m²) | Steifigkeit e) (N/mm) |
|---|---|---|---|---|---|
| Beispiel | 2,0 | 1,53 | 50,0 | ohne Bruch | 500 |
| Vergleichs- beispiel | 2,0 | 1,71 | 38,4 | ohne Bruch | 350 |

a) nach DIN 53 735, bei 230°C und 2,16 kg
b) durch Siebanalyse
c) nach DIN 53 492
d) nach DIN 53 453
e) nach DIN 53 445

5

**Patentansprüche**
**Patentansprüche für folgende Vertragsstaaten : DE, GB, FR, IT, NL, BE, AT**

1. Verfahren zur Herstellung von Propylen-Ethylen-Copolymerisaten in einem bewegten Festbett, wobei man aus der Gasphase heraus zunächst in einer ersten Polymerisationszone bei einem Druck von 20 bis 40 bar und einer Temperatur von 60 bis 90°C Propylen durch Zufuhr eines Ziegler-Natta-Katalysatorsystems polymerisiert und in einer zweiten Polymerisationszone unter einem Druck von 7 bis 35 bar und bei einer Temperatur von 40 bis 70°C dem aus der ersten Polymerisationszone ausgebrachten feinteiligen Polymerisat ein Gemisch aus Olefinen hinzupolymerisiert, dadurch gekennzeichnet, daß man in der zweiten Polymerisationszone ein Gemisch aus Propylen, Ethylen und einem weiteren $\alpha$-Olefin mit 4 bis 10 C-Atomen hinzupolymerisiert, dabei das Verhältnis der Partialdrücke zwischen Propylen und Ethylen im Bereich von 100 : 20 bis 100 : 120 und das zwischen Propylen und dem weiteren $\alpha$-Olefin im Bereich von 100 : 1 und 100 : 20 einstellt, den Druck in der zweiten Polymerisationszone um wenigstens 5 bar unterhalb des Drucks in der ersten Polymerisationszone wählt und das Gewichtsverhältnis zwischen den in der ersten und den in der zweiten Polymerisationszone umgesetzten Monomeren so bemißt, daß es in einem Bereich zwischen 100 : 10 und 100 : 50 liegt.

2. Copolymerisate erhältlich durch das Verfahren gemäß dem Anspruch 1.

**Patentanspruch für folgenden Vertragsstaat : ES**

1. Verfahren zur Herstellung von Propylen-Ethylen-Copolymerisaten in einem bewegten Festbett, wobei man aus der Gasphase heraus zunächst in einer ersten Polymerisationszone bei einem Druck von 20 bis 40 bar und einer Temperatur von 60 bis 90°C Propylen durch Zufuhr eines Ziegler-Natta-Katalysatorsystems polymerisiert und in einer zweiten Polymerisationszone unter einem Druck von 7 bis 35 bar und bei einer Temperatur von 40 bis 70°C dem aus der ersten Polymerisationszone ausgebrachten feinteiligen Polymerisat ein Gemisch aus Olefinen hinzupolymerisiert, dadurch gekennzeichnet, daß man in der zweiten Polymerisationszone ein Gemisch aus Propylen, Ethylen und einem weiteren $\alpha$-Olefin mit 4 bis 10 C-Atomen hinzupolymerisiert, dabei das Verhältnis der Partialdrücke zwischen Propylen und Ethylen im Bereich von 100 : 20 bis 100 : 120 und das zwischen Propylen und dem weiteren $\alpha$-Olefin im Bereich von 100 : 1 und 100 : 20 einstellt, den Druck in der zweiten Polymerisationszone um wenigstens 5 bar unterhalb des Drucks in der ersten Polymerisationszone wählt und das Gewichtsverhältnis zwischen den in der ersten und den in der zweiten Polymerisationszone umgesetzten Monomeren so bemißt, daß es in einem Bereich zwischen 100 : 10 und 100 : 50 liegt.

**Claims**
**Claims for the following Contracting States : DE, GB, FR, IT, NL, BE, AT**

1. A process for preparing a propylene-ethylene copolymer in an agitated bed of solids by first polymerizing propylene from the gas phase in a first polymerization zone at 20-40 bar and 60-90°C by addition of a Ziegler-Natta catalyst system, and copolymerizing in a second polymerization zone at 7-35 bar and 40-70°C the finely divided polymer from the first polymerization zone with a mixture of olefins, which comprises copolymerizing in the second polymerization zone with a mixture of propylene, ethylene and a further $\alpha$-olefin of from 4 to 10 carbon atoms, setting the ratio of the partial pressures between propylene and ethylene within the range from 100 : 20 to 100 : 120 and that of the partial pressures between propylene and the further $\alpha$-olefin within the range from 100 : 1 to 100 : 20, setting the pressure in the second polymerization zone at at least 5 bar below the pressure in the first polymerization zone, and determining the weight ratio between the monomers reacted in the first polymerization zone and those reacted in the second polymerization zone in such a way that said weight ratio is within the range from 100 : 10 to 100 : 50.

2. A copolymer obtainable by the process of claim 1.

**Claim for the following Contracting State : ES**

1.  A process for preparing a propylene-ethylene copolymer in an agitated bed of solids by first polymerizing propylene from the gas phase in a first polymerization zone at 20-40 bar and 60-90°C by addition of a Ziegler-Natta catalyst system, and copolymerizing in a second polymerization zone at 7-35 bar and 40-70°C the finely divided polymer from the first polymerization zone with a mixture of olefins, which comprises copolymerizing in the second polymerization zone with a mixture of propylene, ethylene and a further α-olefin of from 4 to 10 carbon atoms, setting the ratio of the partial pressures between propylene and ethylene within the range from 100 : 20 to 100 : 120 and that of the partial pressures between propylene and the further α-olefin within the range from 100 : 1 to 100 : 20, setting the pressure in the second polymerization zone at at least 5 bar below the pressure in the first polymerization zone, and determining the weight ratio between the monomers reacted in the first polymerization zone and those reacted in the second polymerization zone in such a way that said weight ratio is within the range from 100 : 10 to 100 : 50.

**Revendications**
**Revendications pour les Etats contractants suivants : DE, GB, FR, IT, NL, BE, AT**

1.  Procédé de préparation de copolymères du propylène et de l'éthylène dans un lit solide mobilisé, conformément auquel on polymérise au départ de la phase gazeuse du propylène d'abord dans une première zone de polymérisation, à une température de 60 à 90°C et sous une pression de 20 à 40 bars, par l'addition d'un système catalytique de Ziegler-Natta et, dans une seconde zone de polymérisation, on polymérise un mélange d'oléfines avec le polymère finement divisé sorti de la première zone de polymérisation, à une température de 40 à 70°C et sous une pression de 7 à 35 bars, caractérisé en ce que l'on polymérise, dans la seconde zone de polymérisation, un mélange de propylène, d'éthylène et d'une autre α-oléfine comportant de 4 à 10 atomes de carbone, on règle, pour ce faire, le rapport des pressions partielles entre propylène et éthylène dans la plage de 100:20 à 100:120 et on règle celle entre le propylène et l'autre α-oléfine dans la plage de 100:1 à 100:20, on choisit la pression dans la seconde zone de polymérisation à une valeur inférieure d'au moins 5 bars à la pression qui règne dans la première zone de polymérisation et on mesure le rapport pondéral entre les monomères convertis dans la première et dans la seconde zones de polymérisation de manière à ce qu'il se situe entre 100:10 et 100:50.

2.  Copolymères que l'on peut obtenir par la mise en oeuvre du procédé suivant la revendication 1.

**Revendication pour l'Etat contractant suivant : ES**

1.  Procédé de préparation de copolymères du propylène et de l'éthylène dans un lit solide mobilisé, conformément auquel on polymérise au départ de la phase gazeuse du propylène d'abord dans une première zone de polymérisation, à une température de 60 à 90°C et sous une pression de 20 à 40 bars, par l'addition d'un système catalytique de Ziegler-Natta et, dans une seconde zone de polymérisation, on polymérise un mélange d'oléfines avec le polymère finement divisé sorti de la première zone de polymérisation, à une température de 40 à 70°C et sous une pression de 7 à 35 bars, caractérisé en ce que l'on polymérise, dans la seconde zone de polymérisation, un mélange de propylène, d'éthylène et d'une autre α-oléfine comportant de 4 à 10 atomes de carbone, on règle, pour ce faire, le rapport des pressions partielles entre propylène et éthylène dans la plage de 100:20 à 100:120 et on règle celle entre le propylène et l'autre α-oléfine dans la plage de 100:1 à 100:20, on choisit la pression dans la seconde zone de polymérisation à une valeur inférieure d'au moins 5 bars à la pression qui règne dans la première zone de polymérisation et on mesure le rapport pondéral entre les monomères convertis dans la première et dans la seconde zones de polymérisation de manière à ce qu'il se situe entre 100:10 et 100:50.